# EUROPÄISCHE PATENTSCHRIFT

(11) **EP 3 039 291 B1**
(45) Veröffentlichungstag und Bekanntmachung des Hinweises auf die Patenterteilung: **25.04.2018**
(21) Anmeldenummer: 14759119.2
(22) Anmeldetag: 20.08.2014
(51) Int. Cl.: F04B 33/00, B60C 23/14, B62M 6/90, F04B 33/02, F04B 35/04, F04B 35/06, F04B 41/02

(54) **FAHRRAD MIT EINEM AUTOMATISIERTEN DRUCKBEAUFSCHLAGUNGSSYSTEM**
BICYCLE WITH AN AUTOMATIC PRESSURIZATION SYSTEM
CYCLE PRÉSENTANT UN SYSTÈME DE PRESSURISATION AUTOMATISÉ

(30) Priorität: 26.08.2013 DE 102013109215
(43) Veröffentlichungstag der Anmeldung: 06.07.2016
(73) Patentinhaber: Wexelbar GmbH & Co. KG, 42899 Remscheid (DE)
(72) Erfinder: KRÜDENSCHEIDT, Lars, 42477 Radevormwald (DE)
(74) Vertreter: advotec.
(86) Internationale Anmeldenummer: PCT/EP2014/067770
(87) Internationale Veröffentlichungsnummer: WO 2015/028374

(56) Entgegenhaltungen:
- DE-A1-102005 051 284
- DE-A1-102010 024 476
- DE-A1-102011 081 682
- GB-A- 2 385 030

## Beschreibung

Die Erfindung betrifft ein Fahrrad mit einem automatisierten Druckbeaufschlagungssystem für mindestens eine mit einem Druckmedium beaufschlagte Komponente nach dem Oberbegriff des Anspruchs 1.

Aus dem Stand der Technik in Form des europäischen Patents EP 1 940 635 B1 ist ein Fahrrad bekannt, welches ein Druckbeaufschlagungssystem bestehend aus einer Antriebseinheit, einer Druckquelle, Bedieneinheiten inklusive Ventilen, Schläuchen sowie weiteren modifizierten Fahrradbauteilen umfasst. Über die Antriebseinheit in Form eines an der Kurbel befestigten, zusätzlichen Kettentriebs wird durch eine Kurbelwelle die Druckquelle, in diesem Fall ein Hubkolbenkompressor, angetrieben. Weiterhin umfasst die Druckquelle einen Speicherabschnitt. Wird ein minimaler Druck in diesem Speicherabschnitt unterschritten, wird durch eine Kupplung oder eine Ventilschaltung der Kompressor in Betrieb genommen. Erreicht der Speicherabschnitt einen eingestellten Maximaldruck, wird der Antrieb in einen Leerlaufmodus geschaltet und der Kompressor deaktiviert. Über eine Schlauchverbindung wird das Medium vom Speicherabschnitt zu den Eingangsöffnungen der Bedieneinheiten am Lenker geführt, die durch Manometer zum Messen und Ablesen des aktuellen Drucks in den beaufschlagten Komponenten, beispielsweise Reifen vorne und hinten sowie Federgabel und Dämpferelement, und Schaltwippen zum Verändern des Drucks gekennzeichnet sind. Die Ausgänge der Bedieneinheiten sind bei Federgabel und Dämpferelement direkt, bei den Reifen indirekt über modifizierte Naben mit ihren Zielkomponenten verbunden. Das System ermöglicht für jede Komponente das stufenlose Erhöhen und Senken des Luftdrucks.

Druckschrift DE 10 2011 081 682 A1 offenbart ein Fahrrad mit einem Rahmen und zwei mit Druckluft beaufschlagten Komponenten. Das Fahrrad umfasst zudem eine Druckquelle, welche mit den beiden Komponenten pneumatisch verbindbar ist. Die Druckquelle ist mittels eines Motors antreibbar, wobei hierzu ein Steuergerät vorgesehen ist.

Druckschrift GB 2 385 030 A offenbart ein Fahrrad mit einem Rahmen und einer mit einem gasförmigen Druckmedium beaufschlagten Komponente. Zudem ist ein Druckbeaufschlagungssystem vorgesehen, welches eine Nocke, einen Kolben, einen Zylinder sowie einen Verbindungsschlauch umfasst. Über den Verbindungsschlauch ist das Druckbeaufschlagungssystem mit der Komponente verbindbar.

Aus Druckschrift DE 10 2010 024 476 A1 ist eine Drucklufteinrichtung bekannt, welche eine Bremsanlage oder eine Luftfederungsanlage sein kann und als mit einem gasförmigen Druckmedium beaufschlagte Komponente auffassbar ist. Die Drucklufteinrichtung ist pneumatisch mit einem Druckbeaufschlagungssystem verbunden, welche eine als Kompressor ausgeführten Druckquelle umfasst. Der Kompressor ist mit einem Motor verbunden und durch diesen antreibbar. Das Fahrzeug hat zudem eine Steuereinrichtung, welche die Definition von zumindest einem als Grenzwert bezeichneten Solldruck erlaubt. Der mittels eines Drucksensors gemessene Wert bezieht sich hierbei auf einen Steuerdruck in einer Systemdruckleitung.

Druckschrift DE 10 2005 051 284 A1 offenbart ein Fahrrad mit einen Rahmen und zwei mit einem gasförmigen Druckmedium beaufschlagte Komponenten. Mit den Komponenten ist ein Druckbeaufschlagungssystem pneumatisch verbunden, welches eine Druckquelle aufweist.

Insbesondere sportlich ambitionierte Fahrradfahrer, die auf verschiedenen Untergründen fahren, haben bisweilen unter anderem das Bedürfnis, den Luftdruck, mit dem die Reifen ihres Fahrrads beaufschlagt sind, dem jeweiligen Untergrund anzupassen. Hierzu muss der Fahrradfahrer bisher anhalten, um den Reifendruck verringern bzw. mit einer Handpumpe erhöhen zu können. Die gleiche Problematik besteht bei pneumatischen Dämpfungselementen, die mit einem dem jeweiligen Untergrund bzw. Terrain angepassten Luftdruck beaufschlagt werden sollen. Der Stand der Technik bietet diesbezüglich nur wenig Komfort, beispielsweise muss der Fahrer die Drücke manuell einstellen und dabei während der Fahrt die Manometer kontinuierlich beobachten. Weiterhin ist eine automatische Regelung auf vorher eingestellte Solldrücke nicht möglich.

Der Erfindung liegt die Aufgabe zugrunde, ein gattungsgemäß ausgebildetes Fahrrad derart weiterzubilden, dass während der Fahrt eine automatische Einstellung eines Gasdrucks einer mit einem gasförmigen Druckmedium beaufschlagten Komponente des Fahrrads auf ein vorher festgelegtes Niveau möglich ist.

Diese Aufgabe wird durch das erfindungsgemäße Fahrrad mit dem Druckbeaufschlagungssystem gemäß Anspruch 1 gelöst. Vorteilhafte Ausgestaltungen sind Gegenstand der Unteransprüche.

Der Kern der Erfindung besteht darin, eine möglichst autonome bzw. automatische Steuerung und Regelung der zumindest einen mit Druckmedium beaufschlagten Komponente bereitzustellen, mit welcher innerhalb kürzester Zeit der Gasdruck in den mit dem gasförmigen Druckmedium beaufschlagten Komponenten anhand vordefinierter bzw. vorgebbarer Sollwerte verändert werden kann.

Dazu sieht die erfindungsgemäße Lösung zunächst eine Druckquelle vor. Zudem basiert die Grundidee der vorliegenden Erfindung darauf zumindest auch die Druckquelle des Fahrrads mit einer Energieversorgungseinheit zu verbinden und mittels der Energieversorgungseinheit zu betreiben. Schließlich sieht das vorgeschlagene Fahrrad eine Steuereinrichtung vor, die durch das Einstellen zumindest eines Solldruckwerts und die Beaufschlagung der zumindest einen Komponente mit dem Druckmedium anhand des zumindest einen Solldruckwerts die automatische Regelung des Fahrrads bzw. der mit dem Druckmedium beaufschlagten Komponente ermöglicht.

Vorteilhaft aber nicht zwingend ist es dabei, die Druckquelle als elektrisch betriebene Druckquelle und die Energieversorgungseinheit entsprechend als elektrische Energieversorgungseinheit vorzusehen.

Ein Fahrrad im Sinne der vorliegenden Anmeldung soll nicht zwingend als Zweirad verstanden werden. Beispielsweise auch Liegeräder mit zwei oder mehr Rädern sowie ähnliche nicht motorisch angetriebene Mehrräder bzw. Fahrzeuge sollen als Fahrrad im Sinne dieser Offenbarung verstanden werden.

Zudem ist nachteilig am bekannten Stand der Technik, dass die Bereitstellung des Drucks des Druckmediums im System, insbesondere im Speicherabschnitt, zwangsläufig immer über die Antriebseinheit des Fahrrads erfolgen muss. Dadurch kann eine zusätzliche Belastung für den Benutzer bzw. Fahrer oder eine entsprechende Verringerung der Antriebsleistung nicht von den sonstigen Betriebsbedingungen bzw. Umweltbedingungen abhängig gemacht werden. Schon gar nicht kann eine Erhöhung des Drucks in einer mit Druck beaufschlagten Komponente ohne eine entsprechende zusätzliche Belastung des Benutzers oder Fahrers oder einer entsprechenden Verringerung der Antriebsleitung erreicht werden.

Um den in dem Speicherabschnitt herrschenden Gasdruck auf einem konstanten Niveau halten zu können, ist eine elektronische Steuerung einzusetzen. Eine dazu vorgesehene Steuereinrichtung übernimmt beispielsweise neben der Kontrolle des Gasdrucks im Speicherabschnitt auch die Kontrolle der Drücke in den einzelnen zu steuernden Komponenten. Die Steuereinrichtung weist dabei zumindest eine Bedieneinheit, die bevorzugt am Lenker, beispielsweise mit einer Schelle, angebracht wird und dem Fahrer die Interaktion mit dem Druckbeaufschlagungssystem ermöglicht, sowie eine Regeleinheit, auf welche die Luftströme über Ventile koordiniert und beispielsweise entweder in oder am Rahmen oder Anbauteilen angebracht wird.

Zur Veränderung der entsprechenden Drücke ist zumindest ein Ventil im Fahrrad verbaut, welches mit der Steuereinrichtung verbunden ist, von der Regeleinheit angesteuert wird und einer entsprechenden Komponente zugeordnet ist und je nach Schaltzustand Luft in die Komponente oder aus der Komponente leitet.

Nach einem ersten Ausführungsbeispiel erfolgen der Antrieb der Druckquelle sowie gegebenenfalls die Energieversorgung anderer elektrischer Komponenten des Druckbeaufschlagungssystems mittles eines elektrischen Energiespeichers, bestenfalls eines Akkumulators. Dadurch wird ermöglicht, dass die Druckquelle nur vom Speicherzustand des Energiespeichers abhängig und ansonsten völlig situationsunabhängig Druckmedium mit einem gewünschten Druck für die entsprechende oder die entsprechenden Komponenten bereitstellen kann. Dadurch wird die Automatisierung des Druckbeaufschlagungssystems des vorgeschlagenen Fahrrads in besonders vorteilhafter Weise weitergebildet, da in diesem Fall die Steuerung und die Regelung der Komponente völlig unabhängig von dem sonstigen Betriebszustand des Fahrrads erfolgen kann.

Beispielsweise kann bei steiler Bergauffahrt und geladenem Energiespeicher bei einem Übergang von einem losen Untergrund auf eine befestigte Straße der Druck der Reifen, der Druck einer Federgabel oder eines sonstigen Dämpfungselements, welche mit Druckmedium beaufschlagt werden, erhöht werden, ohne dass dazu die Antriebsleistung des Fahrers verringert oder zusätzliche Leistung seitens des Fahrers oder Benutzers bereitgestellt werden müsste, um das Druckbeaufschlagungssystem zu versorgen. Alles was zur entsprechenden Druckänderung nötig ist, ist die Wahl eines vordefinierten oder die Definition eines gewünschten Solldrucks.

Gemäß einer weiteren vorteilhaften Ausführungsform ist die Druckquelle als Kompressor in Kombination mit einem Elektromotor sowie eines möglicherweise notwendigen Getriebes realisiert.

Alternativ oder zusätzlich zur Verwendung eines Akkumulators als Energieversorgungseinheit kann die Energie zum Betrieb von zumindest der Druckquelle auch von einer anderen Energieversorgungseinheit, beispielsweise Batterie, Solarmodul, Dynamo, (Fahrt-)Windgenerator o.ä. stammen oder aber durch den Fahrer selbst über einen applizierten Kurbeltrieb mit Kette oder Riemen aufgebracht werden.

Die gesamte Antriebseinheit mit Motor und Getriebe sowie andere Teile der Druckluftquelle, hier der Kompressor, sind bevorzugt patronenartig ausgebildet und im Rahmen des Fahrrads angeordnet. Besonders bevorzugt ist es dabei, die Teile in einem Sattelrohr des Fahrrads eingepasst anzuordnen. Alternativ kann die Druckluftquelle am Rahmen oder an Anbauteilen des Fahrrads angebracht sein.

Bei der Montage eines derartigen Druckbeaufschlagungssystems ist es erforderlich, eine Bohrung in das Sattelrohr des Fahrrads einzubringen, um einen Luftansaugstutzen für den Kompressor anzubringen. Dieser Ansaugstutzen dient einerseits zum Ansaugen von Umgebungsluft und andererseits zur weiteren Sicherung der Druckquelle in dem Sattelrohr. Um zu verhindern, dass Partikel angesaugt werden, die die Funktion des Kompressors beeinträchtigen könnten, ist der Luftansaugstutzen vorzugsweise mit einem Filter zu versehen. Damit kann auch verhindert werden, dass sich Kondenswasser im System sammelt. Das Sattelrohr eignet sich für die Anordnung der Teile der Druckquelle bzw. des Druckbeaufschlagungssystems, da es in der Regel von oben zugänglich ist.

Um stets einen ausreichenden Druck zur Befüllung der betreffenden Fahrradkomponente zur Verfügung zu haben, weist die Druckquelle gemäß einer Ausgestaltung des erfindungsgemäßen Fahrrads einen Speicherabschnitt auf, der mittels des Kompressors mit einem Gasdruck beaufschlagbar ist. Der Kompressor pumpt in diesem Fall also das Gas, in der Regel Luft, in den Speicherabschnitt, der dann bei Bedarf den entsprechenden Gasdruck für die betreffende Komponente zur Verfügung stellt.

Als Speicherabschnitt wird in einer vorteilhaften Weiterbildung ein Teil des Rahmens genutzt, der gegebenenfalls vorher luftdicht abgeschottet wird. Dementsprechend bildet zumindest ein Teil des Rahmens einen Teil der Begrenzung bzw. des Gehäuses des Speicherabschnitts. Dadurch kann Material und damit Gewicht eingespart werden. Zudem entsteht dadurch eine besonders vorteilhafte, kompakte Bauweise des Fahrrads. Ist dies nicht möglich oder gewünscht, kann ebenso ein separater Behälter im Rahmen eingebracht werden oder außen am Rahmen oder Anbauteilen befestigt werden. Alternativ ist auch ein System ohne Zwischenspeicher denkbar.

Gemäß einer vorteilhaften Ausgestaltung weist die Bedieneinheit ein Anzeigemittel auf, mit dem Informationen bzw. Inhalte an den Benutzer bzw. Fahrer vermittelt werden können. Bevorzugt wird dabei eine Bedieneinheit ohne ein Anzeigemittel zur Anzeige der im System herrschenden Drücke. Vielmehr ist vorteilhaft eine Bedieneinheit vorgesehen, welche nur zur Solldruckeinstellung dient und gegebenenfalls dafür notwendige Anzeigemittel aufweist.

Die Bedieneinheit kann alternativ aber auch ein Anzeigemittel zur Anzeige aller im System gemessenen Drücke enthalten, welche beispielsweise analog über Manometer oder digital durch von elektronischen Druckmessern bereitgestellte Signale in Form von LEDs oder einem Display ausgegeben werden. Weiterhin können auch andere Informationen mittels eines oder mehrerer Anzeigemittel ausgegeben bzw. dargestellt werden. Beispielsweise können mittels Anzeigemittel in Form von LEDs oder Displays der Akkuladezustand - wenn genutzt - sowie Systemzustände wie Betriebsbereitschaft, Aktivität oder Fehler ausgegeben werden.

Die Bedieneinheit wird je nach Ausführung elektronisch, hydraulisch, pneumatisch oder kabellos mit der Steuerungseinheit verbunden. Im Falle der vorrangigen elektronischen Verbindung können die Signale analog, beispielsweise über ein Potentiometer zur Solldruckeinstellung, oder digital, z.B. mit Druckknöpfen, Touchpads o.ä., übermittelt und von der Regeleinheit ausgewertet werden. Dies gilt ebenso für die kabellose Ausführung. Alternativ kann die Verbindung zwischen Bedien- und Regeleinheit hydraulisch oder pneumatisch realisiert werden, beispielsweise durch einen verschiebbaren Kolben. Auch Kombinationen sind möglich. Die Verbindung dient in jedem Fall zur Übermittlung von Stellsignalen an die Regeleinheit sowie ggf. eine Rückführung von Informationen des Systems an den Bediener mittels eines optionalen Anzeigemittels der Bedieneinheit, wie zuvor beschrieben. Auch eine ggf. anfallende Energieversorgung kann über eine entsprechende Verbindung gewährleistet werden.

Die Regeleinheit ist bevorzugt elektronisch ausgeführt. Sie erhält von der Bedieneinheit beispielsweise elektronische Signale zur Solldruckeinstellung und liefert ihrerseits Informationen zum Systemzustand, zu ermittelten Drücken in den zu beaufschlagenden Komponenten sowie ggf. Informationen zu aufgezeichneten Umgebungsdrücken (Höhenprofile), Zeiten sowie zurückgelegte Distanzen mit zusätzlichen, hier nicht näher genannten Komponenten zur späteren Auswertung durch den Fahrer.

Dazu werden gemäß einer vorteilhaften Ausprägung Drucksensoren, insbesondere elektronische Drucksensoren, die jeweils der mit Druck beaufschlagten Komponente zugeordnet sind, vorgesehen, die mit der Steuereinrichtung, insbesondere der Regeleinheit verbunden sind. Gleiches gilt im weiteren Sinne auch für alle anderen zu steuernden Drücke wie den des Speicherabschnitts, der Reifen und der sonstigen Fahrwerkskomponenten.

Zur Veränderung der entsprechenden Drücke, gemäß einer weiteren vorteilhaften Ausgestaltung der vorliegenden Erfindung, ist ein Magnetventil im Fahrrad verbaut, welches mit der Steuereinrichtung, insbesondere der Regeleinheit verbunden ist, von der Regeleinheit angesteuert wird und einer entsprechenden Komponente zugeordnet ist und je nach Schaltzustand Luft in die Komponente oder aus der Komponente leitet.

Kernfunktion der Regeleinheit ist der Vergleich zwischen dem vom Bediener gewünschten und über die Bedieneinheit festgelegten Solldruck mit dem in der jeweiligen Komponente herrschenden Istdruck sowie deren automatische Anpassung. Dazu weist die Regeleinheit die entsprechenden elektrischen, pneumatischen und/oder hydraulischen Vergleichseinheiten auf.

Dabei können an sich eine oder beliebig viele Komponenten mit einem Ventil gesteuert werden. Mit anderen Worten ausgedrückt, bedeutet dies, dass ein Ventil einer oder mehr als einer mit dem Druckmedium beaufschlagten Komponente zugeordnet sein kann. Wenn es beispielsweise vorteilhaft für den Betrieb des Fahrrads ist, dass in mehreren Komponenten der selbe Solldruck herrscht, kann mittels einem Ventil die Zufuhr von Druckmedium oder die Abfuhr von Druckmedium oder beides für alle diese Komponenten gesteuert werden. Dies kann beispielsweise für den Reifendruck in zwei oder mehr Reifen wünschenswert sein. Alternativ kann aber auch vorgesehen sein, dass ein Ventil exklusiv einer Komponente zugeordnet ist. Dies kann beispielsweise für die Druckbeaufschlagung einer Federgabel oder eines anderen Dämpfungselements besonders vorteilhaft sein, weil dadurch eine selektive Ansteuerung bzw. Druckbeaufschlagung der jeweils einzelnen Komponente ermöglicht wird. Wie bereits angedeutet, kann je nach Anwendung auch zwischen einer Zuordnung von einem Ventil oder mehreren Ventilen für jeweils eine Komponente oder eine Gruppe von Komponenten variiert werden. Beispielsweise kann bei einer Verwendung von einem Mehrwegventil ein einzelnes Ventil für eine Komponente oder eine Gruppe von Komponenten ausreichen. Andererseits kann auch jeweils ein Ventil für die Zufuhr und die Abfuhr von Druckmedium vorgesehen bzw. der Komponente oder den Komponenten zugeordnet sein.

Die gewünschten Druckniveaus bzw. Solldruckwerte können vom Fahrer zuvor eingestellt werden. Dazu sieht das vorgeschlagene Fahrrad ein Einstellmittel am bzw. als Teil der Bedieneinheit vor, mittels dessen zumindest ein Solldruckwert des gasförmigen Druckmediums an/in der zumindest einen beaufschlagten Komponente eingestellt wird.

Weiterhin regelt die Steuereinrichtung, insbesondere die Regeleinheit das Druckniveau im Druckluftspeicher. Dazu ist in einer ebenfalls besonders vorteilhaften Ausführungsform die Regeleinheit mit der Druckquelle, insbesondere mit dem Elektromotor verbunden und regelt den Betriebszustand der Druckquelle. Dementsprechend kann die Regelung derart ausgestaltet sein, dass wenn ein vorher bestimmter Mindestdruck unterschritten wird, die Steuerungseinrichtung bzw. die Regeleinheit die Druckquelle einschaltet, so dass der Speicher befüllt wird. Umgekehrt kann die Steuereinrichtung bzw. die Regeleinheit bei Erreichen eines bestimmten Maximaldrucks die Druckquelle wieder abschalten. Dabei kann beispielsweise vorgesehen sein, dass der Betriebszustand des Elektromotors geändert bzw. gesteuert wird.

Da das Druckbeaufschlagungssystem des Fahrrads nach der Erfindung zur Gasdruckeinstellung mehrerer mit einem gasförmigen Druckmedium beaufschlagter Komponenten des Fahrrads dienen soll, ist es zweckmäßig, eine Verteilereinrichtung vorzusehen, die einerseits eingangsseitig mit der den Kompressor aufweisenden Druckquelle und andererseits ausgangsseitig über mehrere Auslassstutzen oder -kanäle mit den betreffenden Magnetventilen für die Fahrradkomponenten verbunden ist. Um zu verhindern, dass die betreffende, mit dem Druckmedium beaufschlagte Komponente durch einen Überdruck beschädigt wird, ist es in einer vorteilhaften Weiterbildung vorgesehen, dass das Druckbeaufschlagungssystem mit mindestens einem Überdruckventil ausgestattet ist.

Alternativ kann die Regeleinheit hydraulisch bzw. pneumatisch ausgeführt sein. In diesem Fall wird in einem zwischen Bedieneinheit und Regeleinheit befindlichen Hydraulik- oder Pneumatikschlauch ein Kolben verschoben, welcher Ventile öffnet bzw. schließt. Es kann vorgesehen sein, dass dabei die Ventile in der Regeleinheit untergebracht sind. Diese Variante ist jedoch nicht auf eine hydraulische oder pneumatische ausgeführte Regeleinheit beschräkt. Der Druck im Speicher wird in diesem Fall über einen Druckschalter überwacht, welcher die Druckquelle, insbesondere den Elektromotor oder den Kompressor bei Erreichen bzw. Unterschreitung des Mindestdrucks an- und bei Erreichen bzw. Überschreitung eines Maximaldrucks wieder abschaltet. Minimal- und Maximaldruck können selbstverständlich in den unterschiedlichen Ausführungen der Regeleinheit auch gleich sein, so dass der Kompressor immer dann aktiviert wird, wenn der Druck im Speicher unterhalb eines definierten Grenzdrucks liegt.

Die Komponente, die mit dem gasförmigen Druckmedium beaufschlagt ist, ist beispielsweise ein Reifen bzw. dessen Schlauch oder ein pneumatisches Fahrwerkdämpferelement des Fahrrads. Denkbar ist es aber auch, den durch die Druckquelle bereitgestellte Druck bzw. das im Speicherabschnitt unter Druck bevorratete Druckmedium mittels des Druckbeaufschlagungssystems für ein Satteldämpferelement, ein pneumatisch betätigtes Schaltwerk, einen pneumatisch betätigten Umwerfer, eine Druckluftbremse oder dergleichen als entsprechende beaufschlagte Komponente einzusetzen.

Wenn die mit dem Druckmedium beaufschlagte Komponente, die mit der Druckquelle des Druckbeaufschlagungssystems verbunden ist, ein Reifen eines Laufrads des Fahrrads ist, ist es besonders vorteilhaft, wenn das Laufrad eine pneumatische Drehdurchführung umfasst, welche auf der Achse befestigt wird. Sie besteht gemäß einer Ausführungsform aus einem nicht-rotierenden Innenring, welcher über eine Luftleitung mit dem entsprechenden Magnetventil verbunden ist und einem rotierenden Außenring mit rotierender Luftleitung zu dem Reifen bzw. dessen Schlauch sowie einer dazwischen liegenden Dichtung.

Alternativ kann die Luft über eine gedichtete Nabe, in deren Achse eine rahmenfeste oder gabelfeste Luftleitung mündet und die radial mit einer bezüglich der Nabenachse rotierende Luftleitung verbunden ist, die zu dem Reifen bzw. zu dessen Schlauch führt, geleitet werden.

Weitere Vorteile und vorteilhafte Ausgestaltungen des Gegenstandes nach der Erfindung sind der Beschreibung, den Zeichnungen und den Patentansprüchen entnehmbar.

Zwei Ausführungsbeispiele des Gegenstandes nach der Erfindung sind in den Zeichnungen schematisch vereinfacht dargestellt und werden in der nachfolgenden Beschreibung näher erläutert. Es zeigt:
- Fig. 1: eine Ansicht eines erfindungsgemäßen Fahrrads in einer ersten Ausführungs form;
- Fig. 2: eine schematische Darstellung der Gas-, Energie- und Signalwege inkl. der verbauten Komponenten in einer ersten Ausführungsform;
- Fig. 3: eine schematische Darstellung der Gas-, Energie- und Signalwege inkl. der verbauten Komponenten einer alternativen Ausführungsform;
- Fig. 4: eine Draufsicht auf die Bedieneinheit eines Druckbeaufschlagungssystems zur Änderung des Reifendrucks (gleicher Druck in beiden Reifen); und
- Fig. 5: eine schematische Darstellung der pneumatischen Drehdurchführung.

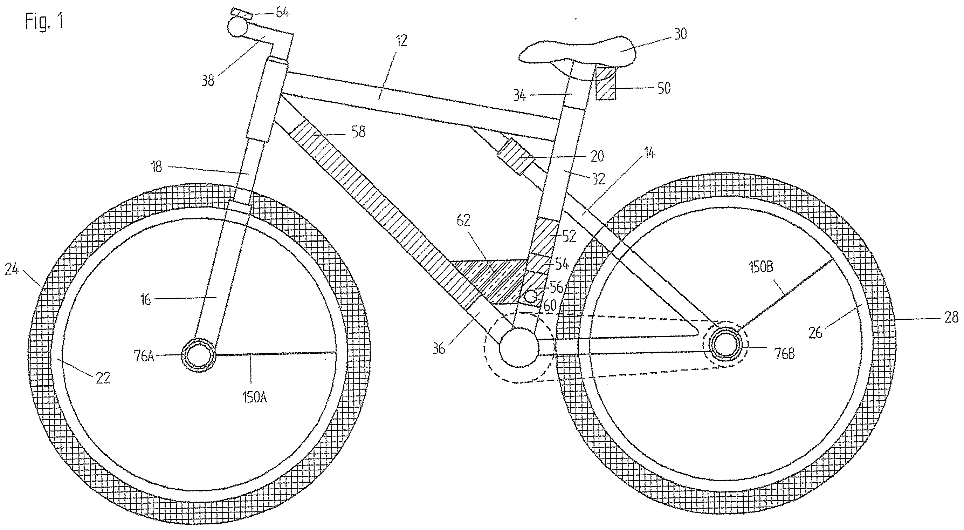

In Fig. 1 ist ein Fahrrad 10 dargestellt, das als so genanntes Mountainbike ausgebildet ist und einen Rahmen 12 aufweist, der mit einem schwenkbar gelagerten Hinterbau 14 sowie mit einer Federgabel 16 versehen ist. Die Federgabel 16 umfasst ein Luftdämpfungselement 18. Der Hinterbau 14 ist mit einem ebenfalls luftgefederten Dämpfungselement 20 versehen. Des Weiteren weist das Fahrrad 10 ein vorderes Laufrad 22 mit einem Vorderreifen 24 und ein hinteres Laufrad 26 mit einem Hinterreifen 28 auf. Der Vorderreifen 24 und der Hinterreifen 28 stellen im Beispiel der Fig. 1 jeweils eine mit einem gasförmigen Druckmedium beaufschlagte Komponente des Fahrrads 10 dar.

Am Sattel 30 ist eine elektrische Energiequelle in Form eines Akkus 50 befestigt.

In dem Sattelrohr 32 des Rahmens 12 ist eine Druckquelle 53, bestehend aus Elektromotor 52 und optionalem Getriebe 54, sowie der Kompressor 56 für ein gasförmiges Druckmedium, im vorliegenden Fall Luft, integriert. Diese Komponenten sind patronenartig ausgebildet und können von oben bei herausgezogener Sattelstütze 34 in das Sattelrohr 32 eingeführt werden. Um Luft ansaugen zu können, wird am Sattelrohr 32 ein Ansaugstutzen 60 angebracht.

Der zur Druckquelle 53 zugehörige Speicherabschnitt 58 ist als abgeschotteter Bereich im Unterrohr 36 des Fahrrads 10 untergebracht. Wie in Figur 1 erkenntlich, wird ein Teil des Rahmens selbst als Teil des Speicherabschnitts genutzt bzw. bildet einen Teil des Gehäuses des Speicherabschnitts.

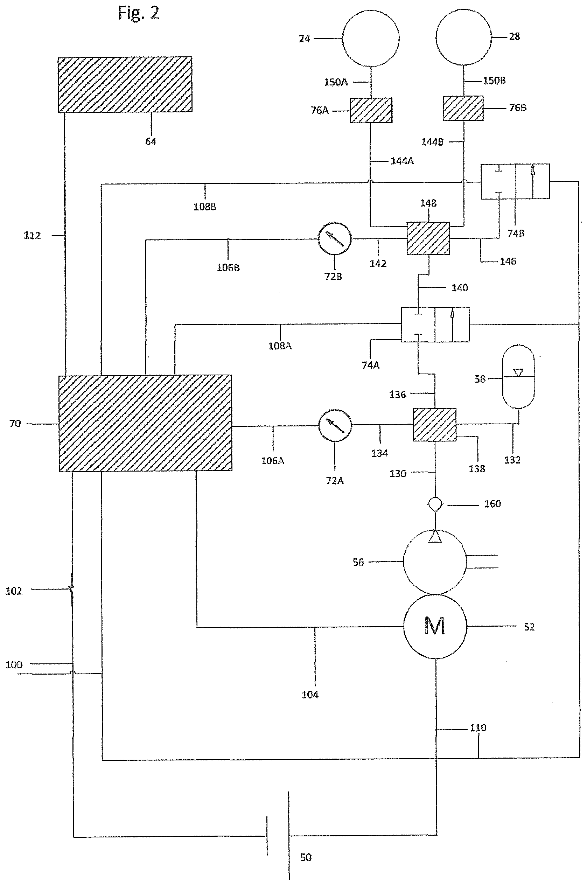

Zwischen Sattelrohr 32 und Unterrohr 36 angeordnet, sind die Regeleinheit 70, die beiden Drucksensoren 72A zur Bestimmung des Drucks im Druckluftspeicher sowie 72B zur Bestimmung des Reifendrucks, die beiden Magnetventile 74A und 74B zum Erhöhen und Senken des Reifendrucks, die Verteiler 138 und 148 sowie die dazugehörigen Leitungen gemäß Fig. 2 untergebracht.

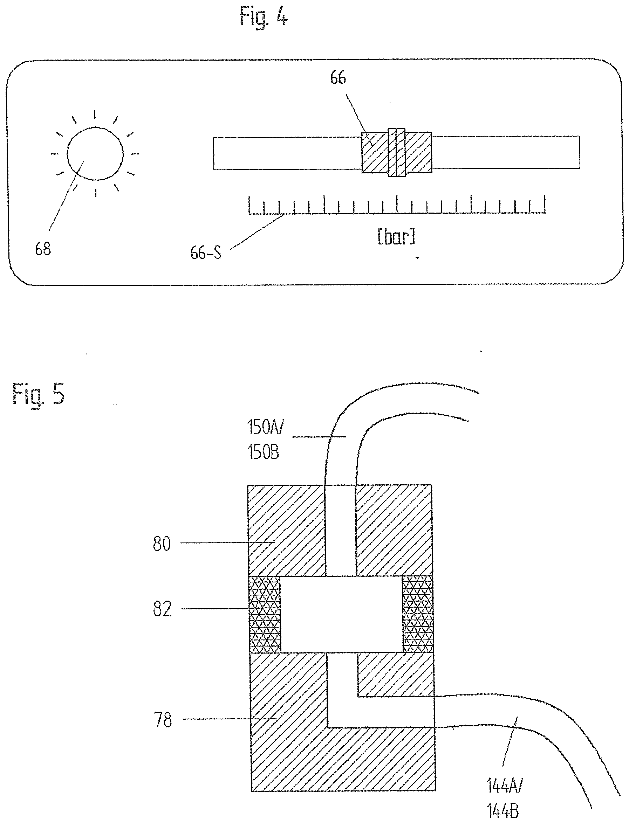

An der Lenkstange 38 wird die Bedieneinheit 64 entsprechend Fig. 4 befestigt. Sie besteht hier aus einem Anzeigemittel in Form einer Status-LED 68, welche durch Farbwechsel und Blinken den aktuellen Systemstatus ausgeben kann, und einem Einstellmittel in Form eines Potentiometers 66.

Auf den Naben sind Drehdurchführungen 76A (vorne) und 76B (hinten) angebracht, welche in Fig. 5 dargestellt sind. Zu erkennen sind auch die rotierenden Druckleitungen 150A und 150B, welche die Drehdurchführungen 76A und 76B jeweils mit dem Vorderrad 24 und dem Hinterrad 28 verbinden. Auf die Darstellung weiterer elektrischer und pneumatischer Verbindungen wird in Fig. 1 zugunsten der Übersicht verzichtet und auf Fig. 2 verwiesen. Alle hier nicht explizit genannten Leitungen verlaufen auf dem kürzesten Weg bevorzugt in oder am Rahmen oder Anbauteilen.

Fig. 2 zeigt schematisch die elektrischen und pneumatischen Verbindungen zwischen den einzelnen Komponenten. Die als Akku 50 ausgebildete Energieversorgungseinheit wird über eine elektrische Leitung 100 dauerhaft mit der Regeleinheit 70 verbunden. Die Verbindung kann durch einen Schalter 102 unterbrochen werden, um das System abzuschalten. Der Akku 50 ist weiterhin durch die elektrische Leitung 104 über die Regeleinheit 70 mit dem Elektromotor 52 der Druckquelle verbunden. Der Ausgang wird bei Bedarf von der Regeleinheit geschaltet, i.d.R. wenn der Luftdruck im Speicherabschnitt 58 einen Mindestdruck unterschreitet. Wird ein Maximaldruck erreicht, wird der Stromfluss getrennt.

Die beiden Drucksensoren 72A für den Speicherdruck und 72B für den Reifendruck werden über die elektrischen Leitungen 106A und 106B mit der Regeleinheit 70 verbunden. Alternativ können die Leitungen entfallen und die Sensoren direkt auf die Platine der Regeleinheit 70 gelötet werden.

Über die ebenfalls elektrischen Leitungen 108A für das Magnetventil 74A zum Erhöhen des Luftdrucks in den Reifen und 108B für das Magnetventil 74B zum Senken des Luftdrucks in den Reifen werden die Magnetventile über die Regeleinheit 70 bei Bedarf geschaltet. Die Magnetventile können alternativ auch durch ein Magnetventil mit drei möglichen Stellungen ausgetauscht werden, die elektrischen und/oder pneumatischen Leitungen werden dann dementsprechend angepasst. Die Beispielschaltung in Fig. 2 wird jedoch mit zwei getrennten Ventilen realisiert. Um die Stromkreise von Motor und den Magnetventilen zu schließen, werden diese noch über die elektrische Leitung 110 mit dem Akku 50 verbunden.

Die Leitung 112 verbindet Bedieneinheit 64 und Regeleinheit 70 miteinander. Die Leitung 112 ist in der beispielhaften Darstellung der Fig. 2 ebenfalls als elektrische Leitung geschaltet.

Die Druckluftleitung 130 verbindet den Ausgang des Kompressors 56 mit einer 4-fach Verteilereinrichtung 138. Im Folgenden werden die pneumatischen Leitungen bzw. die Leitungen, die mit dem Druckmedium beaufschlagt werden oder beaufschlagbar sind, als Druckluftleitungen beschrieben. Mit anderen Worten ausgedrückt, bedeutet dies, dass das in Fig. 2 dargestellte Modell mit Luft als Druckmedium betrieben wird. Andere Druckmittel sind jedoch ebenfalls möglich. Eine entsprechende Anpassung der entsprechenden Druckleitungen hinsichtlich Materials oder anderer Eigenschaften kann dabei jeweils angebracht sein. Druckluftleitung 132 verbindet die Verteilereinrichtung mit dem im Rahmen integrierten Speicherabschnitt 58. Zur Messung des Drucks im Speicherabschnitt verbindet Druckluftleitung 134 die Verteilereinrichtung 138 mit dem Drucksensor 72A zur Bestimmung des Vorratsdrucks im Speicherabschnitt. Druckluftleitung 136 verbindet schließlich die Verteilereinrichtung 138 mit dem Eingang von Magnetventil 74A zum Erhöhen des Reifendrucks. Um mögliche Druckverluste bei Stillstand des Kompressors durch unzureichende Dichtheit bei hohen Drücken in diesem Systemabschnitt zu verhindern, kann ein optionales Rückschlagventil 160 zwischen dem Kompressor 56 und der Druckleitung bzw. Druckluftleitung 130 verbaut werden.

Am Ausgang des Magnetventils 74A verbindet eine Druckluftleitung 140 die Ventile mit einer 5-fach Verteilereinrichtung 148. Von dieser führt eine Druckluftleitung 142 zu dem Drucksensor 72B zur Ermittlung des Reifendrucks. Druckluftleitung 146 verbindet die Verteilereinrichtung 148 mit dem Eingang des Magnetventils 74B zur Senkung des Reifendrucks. Die anderen beiden Druckluftleitungen 144A und 144B der Verteilereinrichtung 148 werden mit den Drehdurchführungen 76A für das Vorderrad 24 und 76B für das Hinterrad 28 verbunden. An dem zweiten Anschluss der Drehdurchführung 76A wird die Druckluftleitung 150A angeschlossen, welche die Drehdurchführung mit dem Vorderreifen 24 verbindet. An der hinteren Drehdurchführung 76B wird entsprechend die Druckluftleitung 150B zur Verbindung mit dem Hinterreifen 28 eingesetzt.

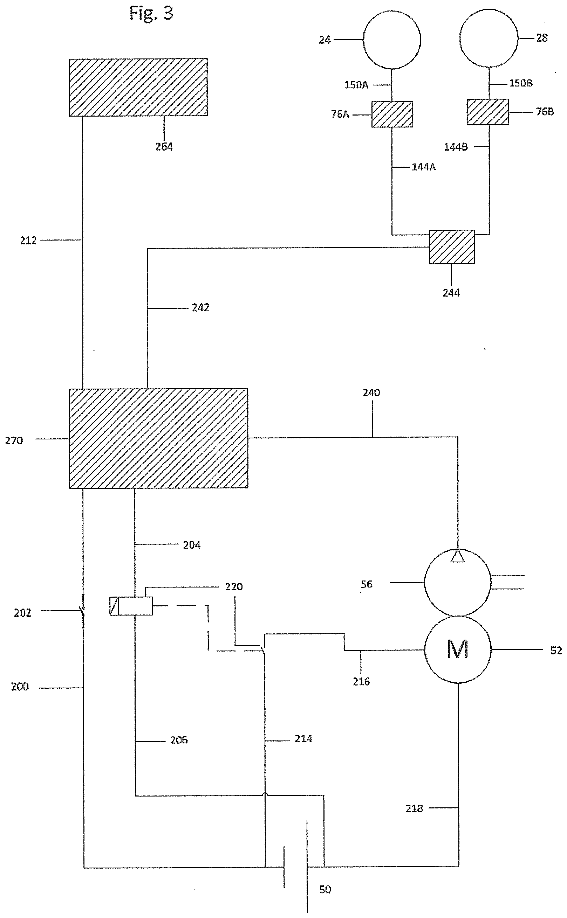

Fig. 3 zeigt vereinfacht eine alternative Variante mit einer integrierten pneumatisch/hydraulisch ausgeführten Regeleinheit 270 und ohne Möglichkeit der Zwischenspeicherung der Druckluft. Auch in Figur 3 wird Luft als Druckmedium verwendet und die entsprechenden Druckleitungen daher als Druckluftleitungen bezeichnet. Die Bedieneinheit 264 kann über ein Einstellmittel in Form eines Schiebereglers wie in der Schaltung aus Fig. 2 bedient werden, jedoch bewirkt dieser in der hier als Hydraulikleitung 212 ausgeführten Verbindung mit der Regeleinheit 270 das Verschieben eines Kolbens. Eine LED als Anzeigemittel an der Bedieneinheit zur Statusbestimmung des Systems entfällt. Der Akku 50 als Energievorsorgungseinheit wird über eine elektrische Leitung 200 mit einem in der Regeleinheit 270 integrierten Druckschalter verbunden, welcher den Stromkreis über die elektrische Leitungen 204 und 206 schließt, wenn die integrierte, pneumatisch-mechanische Schaltung eine Erhöhung des Drucks in den Reifen verlangt. Dadurch wird über ein Relais 220 ein weiterer Stromkreis geschlossen, bestehend aus den elektrischen Leitungen 214, 216 und 218 sowie dem Elektromotor 52, welcher durch die Schaltung aktiviert wird. Folglich produziert der Kompressor 56 der Druckquelle Druckluft, welche über eine Druckluftleitung 240 zur Regeleinheit 270 geleitet wird. In dieser Regeleinheit 270 befindet sich ein Ventil bzw. eine Ventilanordnung, die im Fall einer gewünschten Druckerhöhung neben der Schließung des elektronischen Druckschalters den Luftfluss an die Druckluftleitung 242 weiterleitet. Über eine Verteilereinrichtung 244 wird die Luft schließlich entsprechend Fig. 2 über die Druckluftleitung 144A, das Drehventil 76A und die Druckluftleitung 150A in den Vorderreifen 24 sowie über die Druckluftleitung 144B, das Drehventil 76B sowie die Druckluftleitung 150B in den Hinterreifen 28 geleitet.

Wird über die Bedieneinheit 264 ein geringerer Druck als momentan in den Reifen vorhanden gewünscht, wird in der Regeleinheit ein entsprechendes Ventil geöffnet, wodurch die Luft aus den Reifen in die integrierte Regeleinheit 270 und von hier an die Umgebung abgegeben wird.

Über einen Schalter 202 kann der Stromfluss im System deaktiviert werden.

Fig. 4 zeigt eine Bedieneinheit für das Druckbeaufschlagungssystem. Sie besteht hier aus einem Potentiometer 66 als Einstellmittel, über welches der Reifendruck beider Reifen geändert werden kann. Der Solldruck wird über die Skala 66-S bestimmt. Weiterhin ist eine mehrfarbige LED 68 zu erkennen. Skala und LEDs sind demnach Bestandteile eines Anzeigemittels bzw. jeweilige Anzeigemittel. Alternativ zu der in Fig. 4 dargestellten Ausführung kann die Bedieneinheit auch ein Display und/oder ein analoges Zeigerinstrument und/oder dergleichen als Anzeigemittel aufweisen.

In Fig. 5 ist eine Drehdurchführung 76A bzw. 76B schematisch dargestellt. Sie besteht im Wesentlichen aus einem auf der Achse fest montierten Innenring 78, an dem die Druckleitung 144A für den vorderen Reifen 24 bzw. 144B für den hinteren Reifen 28 mit dem Verteiler 148 verbunden wird. Am rotierenden Außenring 80 werden die Leitungen 150A für den Vorderreifen 24 bzw. 150B für den Hinterreifen 28 angeschlossen. Zwischen den beiden Ringen befindet sich eine Dichtung 82, welche den verlustfreien Transport der Druckluft gewährleistet.

## Patentansprüche

1. Fahrrad (10) umfassend einen Rahmen (12), mindestens eine mit einem gasförmigen Druckmedium beaufschlagte Komponente (18, 20, 24, 28), sowie ein Druckbeaufschlagungssystem, welches mit der zumindest einen Komponente (18, 20, 24, 28) pneumatisch verbunden ist,
wobei
das Druckbeaufschlagungssystem eine Druckquelle und eine Energieversorgungseinheit (50) aufweist, die mit der Druckquelle verbunden ist, sowie eine Steuereinrichtung umfasst,
**dadurch gekennzeichnet, dass**
die Steuereinrichtung die Definition von zumindest einem Solldruckwert der zumindest einen Komponente (18, 20, 24, 28) erlaubt,
die Steuereinrichtung die Beaufschlagung der zumindest einen Komponente (18, 20, 24, 28) mit dem Druckmedium anhand des zumindest einen Solldruckwerts steuert,
die Steuereinrichtung zumindest eine Bedieneinheit (64, 264) und eine Regeleinheit (70, 270) aufweist und
zumindest ein Ventil vorgesehen ist, welches mit der Steuereinrichtung verbunden ist, von der Regeleinheit (70, 270) angesteuert wird und der Komponente (18, 20, 24, 28) zugeordnet ist und je nach Schaltzustand Luft in die Komponente (18, 20, 24, 28) oder aus der Komponente (18, 20, 24, 28) leitet.

2. Fahrrad (10) nach Anspruch 1,
**dadurch gekennzeichnet,**
**dass** die Regeleinheit (70, 270) zum Vergleich zwischen dem von einem Bediener gewünschten und über die Bedieneinheit (64, 264) festgelegten Solldruckwert mit dem in der jeweiligen Komponente (18, 20, 24, 28) herrschenden Istdruck sowie deren automatische Anpassung ausgebildet ist, wobei die Regeleinheit (70, 270) hierzu die entsprechenden elektrischen, pneumatischen und/oder hydraulischen Vergleichseinheiten aufweist.

3. Fahrrad (10) nach Anspruch 1 oder 2,
**dadurch gekennzeichnet,**
**dass** die Energieversorgungseinheit (50) als Energiespeicher, insbesondere als Akkumulator ausgebildet ist.

4. Fahrrad (10) nach einem der Ansprüche 1 bis 3,
**dadurch gekennzeichnet,**
**dass** die Druckquelle zumindest einen Elektromotor (52), einen Kompressor (56) und insbesondere ein Getriebe (54) umfasst.

5. Fahrrad (10) nach Anspruch 4,
**dadurch gekennzeichnet,**
**dass** der Elektromotor (52) und/oder der Kompressor (56) und/oder das Getriebe (54) patronenförmig ausgeführt sind und im Inneren des Rahmens (12) angeordnet ist/sind.

6. Fahrrad (10) nach einem der Ansprüche 1 bis 5,
**dadurch gekennzeichnet,**
**dass** die Druckquelle einen Speicherabschnitt (58) zum Speichern von unter Druck stehendem gasförmigen Druckmedium aufweist und mit der zumindest einen Komponente (18, 20, 24, 28) verbunden ist, und insbesondere zumindest ein Teil des Rahmens (12) einen Teil einer Begrenzung des Speicherabschnitts (58) bildet.

7. Fahrrad (10) nach einem der Ansprüche 1 bis 6,
**dadurch gekennzeichnet,**
**dass** die Bedieneinheit (64, 264) und die Regeleinheit (70, 270) kabelgebunden oder kabellos elektronisch oder pneumatisch oder hydraulisch miteinander verbunden sind.

8. Fahrrad (10) nach einem der Ansprüche 1 bis 7,
**dadurch gekennzeichnet,**
**dass** die Regeleinheit (70, 270) mit der Druckquelle verbunden ist und den Betriebszustand der Druckquelle steuert.

9. Fahrrad (10) nach einem der Ansprüche 1 bis 8,
**dadurch gekennzeichnet,**
**dass** die Regeleinheit (70, 270) die Druckbeaufschlagung der zumindest einen Komponente (18, 20, 24, 28) steuert.

10. Fahrrad (10) nach Anspruch 9,
**dadurch gekennzeichnet,**
**dass** das Druckbeaufschlagungssystem zumindest eine pneumatische Verteilereinrichtung (138, 148, 244) aufweist.

11. Fahrrad (10) nach einem der Ansprüche 1 bis 10,
**dadurch gekennzeichnet,**
**dass** der zumindest einen Komponente (18, 20, 24, 28) ein erster Drucksensor (72B) zugeordnet ist, und der erste Drucksensor (72B) mit der Steuereinrichtung, insbesondere mit der Regeleinheit (70) verbunden ist.

12. Fahrrad (10) nach einem der Ansprüche 1 bis 11,
**dadurch gekennzeichnet,**
**dass** dem Speicherabschnitt (58) ein zweiter Drucksensor (72A) zugeordnet ist, und der zweite Drucksensor (72A) mit der Steuereinrichtung, insbesondere mit der Regeleinheit (70) verbunden ist.

13. Fahrrad (10) nach einem der Ansprüche 1 bis 12,
**dadurch gekennzeichnet,**
**dass** die Bedieneinheit (64, 264) zumindest ein Einstellmittel (66) zum Einstellen von zumindest einem Solldruckwert des gasförmigen Druckmediums in der zumindest einen beaufschlagten Komponente (18, 20, 24, 28) aufweist.

14. Fahrrad (10) nach einem der Ansprüche 1 bis 13,
**dadurch gekennzeichnet,**
**dass** die Bedieneinheit (64, 264) zumindest ein Anzeigemittel (68) aufweist.

15. Fahrrad (10) nach einem der Ansprüche 1 bis 14,
**dadurch gekennzeichnet,**
**dass** eine pneumatische Drehdurchführung (76A, 76B) auf der Achse des Laufrads (22, 26) angeordnet ist und einen nicht rotierenden Innenring (78), einen rotierenden Außenring (80) und eine zwischen Innenring (78) und Außenring (80) angeordnete Dichtung (82) aufweist.

## Claims

1. A bicycle (10) comprising a frame (12), at least one component (18, 20, 24, 28) pressurized by means of a gaseous pressure medium, and a pressurization system which is pneumatically connected to the at least one component (18, 20, 24, 28), the pressurization system having a pressure source and a power supply unit (50), which is connected to the pressure source, and comprising a controller,
**characterized in that**
the controller allows defining at least one target pressure value of the at least one component (18, 20, 24, 28),
the controller controls the pressurization of the at least one component (18, 20, 24, 28) by the pressure medium based on the at least one target pressure value,
the controller has at least one operating unit (64, 264) and a regulating unit (70, 270), and
at least one valve is provided which is connected to the controller, is controlled by the regulating unit (70, 270) and is assigned to the component (18, 20, 24, 28) and leads air into the component (18, 20, 24, 28) or out of the component (18, 20, 24, 28) as a function of a switching state.

2. The bicycle (10) according to claim 1,
**characterized in that**
the regulating unit (70, 270) is configured to compare the target pressure value desired by a user and set via the operating unit (64, 264) to the actual pressure inside the respective component (18, 20, 24, 28) and to automatically adjust them, the regulating unit (70, 270) having the corresponding electrical, pneumatic, and/or hydraulic comparing units for this purpose.

3. The bicycle (10) according to claim 1 or 2,
**characterized in that**
the power supply unit (50) is an energy storage, in particular an accumulator.

4. The bicycle (10) according to any one of claims 1 to 3,
**characterized in that**
the pressure source comprises at least an electric motor (52), a compressor (56) and in particular a transmission (54).

5. The bicycle (10) according to claim 4,
**characterized in that**
the electric motor (52) and/or the compressor (56) and/or the transmission (54) are configured in the shape of a cartridge and disposed inside the frame (12).

6. The bicycle (10) according to any one of claims 1 to 5,
**characterized in that**
the pressure source has a storage section (58) for storing a pressurized gaseous pressure medium and is connected to the at least one component (18, 20, 24, 28), and, in particular, at least a part of the frame (12) forms a part of a boundary of the storage section (58).

7. The bicycle (10) according to any one of claims 1 to 6,
**characterized in that**
the operating unit (64, 264) and the regulating unit (70, 270) are connected to each other via cable or electronically without cable or pneumatically or hydraulically.

8. The bicycle (10) according to any one of claims 1 to 7,
**characterized in that**
the regulating unit (70, 270) is connected to a pressure source and controls the operating state of the pressure source.

9. The bicycle (10) according to any one of claims 1 to 8,
**characterized in that**
the regulating unit (70, 270) controls the pressurization of the at least one component (18, 20, 24, 28).

10. The bicycle (10) according to claim 9,
**characterized in that**
the pressurization system has at least one pneumatic distributing means (138, 148, 244).

11. The bicycle (10) according to any one of claims 1 to 10,
**characterized in that**
a first pressure sensor (72B) is assigned to the at least one component (18, 20, 24, 28), and the first pressure sensor (72B) is connected to the controller, in particular to the regulating unit (70).

12. The bicycle (10) according to any one of claims 1 to 11,
**characterized in that**
a second pressures sensor (72A) is assigned to the storage section (58), and the second pressure sensor (72A) is connected to the controller, in particular to the regulating unit (70).

13. The bicycle (10) according to any one of claims 1 to 12,
**characterized in that**
the operating unit (64, 264) has at least one setting means (66) for setting at least one target pressure value of the gaseous pressure medium in the at least one pressurized component (18, 20, 24, 28).

14. The bicycle (10) according to any one of claims 1 to 13,
**characterized in that**
the operating unit (64, 264) has at least one display means (68).

15. The bicycle (10) according to any one of claims 1 to 14,
**characterized in that**
a pneumatic rotary feed-through (76A, 76B) is disposed on the axis of the wheel (22, 26) and comprises a non-rotating inner ring (78), a rotating outer ring (80) and a seal (82) disposed between the inner ring (78) and the outer ring (80).

## Revendications

1. Bicyclette (10) comprenant un cadre (12), au moins un composant (18, 20, 24, 28) pressurisé par un fluide de pression gazeux et un système de pressurisation qui est relié de manière pneumatique à l'au moins un composant (18, 20, 24, 28),
le système de pressurisation comportant une source de pression et une unité d'alimentation en énergie (50), qui est reliée à la source de pression, ainsi qu'un moyen de commande,
**caractérisée en ce que**
le moyen de commande permet de définir au moins une valeur de consigne de pression de l'au moins un composant (18, 20, 24, 28),
le moyen de commande commande la pressurisation de l'au moins composant (18, 20, 24, 28) par le fluide de pression sur la base de l'au moins une valeur de consigne de pression,
le moyen de commande a au moins une unité de commande (64, 264) et une unité de régulation (70, 270) et
au moins une soupape est prévue qui est reliée au moyen de commande, est commandée par l'unité de régulation (70, 270) et est assignée au composant (18, 20, 24, 28) et guide de l'air dans le composant (18, 20, 24, 28) ou à partir du composant (18, 20, 24, 28) en fonction de son état de commutation.

2. Bicyclette (10) selon la revendication 1,
**caractérisée en ce que**
l'unité de régulation (70, 270) est configurée pour comparer la valeur de consigne de pression souhaitée par un utilisateur et définie par l'intermédiaire de l'unité de commande (64, 264) à une pression réelle existant dans le composant (18, 20, 24, 28) respectif et pour les ajuster automatiquement, l'unité de régulation (70, 270) ayant les unités de comparaison électriques, pneumatiques et/ou hydrauliques correspondantes pour ce faire.

3. Bicyclette (10) selon la revendication 1 ou 2,
**caractérisée en ce que**
l'unité d'alimentation en énergie (50) est configurée comme réservoir d'énergie, notamment comme accumulateur.

4. Bicyclette (10) selon l'une quelconque des revendications 1 à 3,
**caractérisée en ce que**
la source de pression comprend au moins un moteur électrique (52), un compresseur (56) et notamment une transmission (54).

5. Bicyclette (10) selon la revendication 4,
**caractérisée en ce que**
le moteur électrique (52) et/ou le compresseur (56) et/ou la transmission (54) est/sont configuré(es) sous forme de cartouche et est/sont disposé(es) à l'intérieur du cadre (12).

6. Bicyclette (10) selon l'une quelconque des revendications 1 à 5,
**caractérisée en ce que**
la source de pression a un tronçon de stockage (58) destiné à stocker du fluide de pression gazeux sous pression et est relié à l'au moins un composant (18, 20, 24, 28), et au moins une partie du cadre (12) forme notamment une partie d'une limitation du tronçon de stockage (58).

7. Bicyclette (10) selon l'une quelconque des revendications 1 à 6,
**caractérisée en ce que**
l'unité de commande (64, 264) et l'unité de régulation (70, 270) sont reliées par câble ou de manière électronique sans câble ou pneumatique ou hydraulique.

8. Bicyclette (10) selon l'une quelconque des revendications 1 à 7,
**caractérisée en ce que**
l'unité de régulation (70, 270) est reliée à la source de pression et commande l'état de fonctionnement de la source de pression.

9. Bicyclette (10) selon l'une quelconque des revendications 1 à 8,
**caractérisée en ce que**
l'unité de régulation (70, 270) commande la pressurisation de l'au moins un composant (18, 20, 24, 28).

10. Bicyclette (10) selon la revendication 9,
**caractérisée en ce que**
le système de pressurisation a au moins un moyen de distribution (138, 148, 244) pneumatique.

11. Bicyclette (10) selon l'une quelconque des revendications 1 à 10,
**caractérisée en ce qu'**
un premier capteur de pression (72B) est assigné à l'au moins un composant (18, 20, 24, 28), et le premier capteur de pression (72B) est relié au moyen de commande, notamment à l'unité de régulation (70).

12. Bicyclette (10) selon l'une quelconque des revendications 1 à 11,
**caractérisée en ce qu'**
un deuxième capteur de pression (72A) est assigné au tronçon de stockage (58), et le deuxième capteur de pression (72A) est relié au moyen de commande, notamment à l'unité de régulation (70).

13. Bicyclette (10) selon l'une quelconque des revendications 1 à 12,
**caractérisée en ce que**
l'unité de commande (64, 264) a au moins un moyen de réglage (66) destiné à régler au moins une valeur de consigne de pression du fluide de pression gazeux dans l'au moins un composant (18, 20, 24, 28) pressurisé.

14. Bicyclette (10) selon l'une quelconque des revendications 1 à 13,
**caractérisée en ce que**
l'unité de commande (64, 264) a au moins un moyen d'affichage (68).

15. Bicyclette (10) selon l'une quelconque des revendications 1 à 14,
**caractérisée en ce qu'**
un passage rotatif (76A, 76B) pneumatique est disposé sur l'axe de la roue (22, 26) et a une bague intérieure (78) non tournante, une bague (80) extérieure tournante et un joint (82) disposé entre la bague intérieure (78) et la bague extérieure (80).
